# EUROPÄISCHE PATENTSCHRIFT

(11) **EP 1 812 252 B1**
(45) Veröffentlichungstag und Bekanntmachung des Hinweises auf die Patenterteilung: **17.03.2010**
(21) Anmeldenummer: 05819698.1
(22) Anmeldetag: 16.11.2005
(51) Int. Cl.: B60G 7/00, F16C 11/06

(54) **GELENKEINHEIT**
JOINT UNIT
ARTICULATION

(30) Priorität: 19.11.2004 DE 102004055961
(43) Veröffentlichungstag der Anmeldung: 01.08.2007
(73) Patentinhaber: ZF Friedrichshafen AG, 88038 Friedrichshafen (DE)
(72) Erfinder: KUNZE, Ralf, 49152 Bad Essen (DE); KNOPP, Sören, 49179 Ostercappeln (DE); BUHL, Manfred, 49143 Bissendorf (DE); HELMS, Heinfried, 49152 Bad Essen (DE)
(86) Internationale Anmeldenummer: PCT/DE2005/002055
(87) Internationale Veröffentlichungsnummer: WO 2006/053538

(56) Entgegenhaltungen:
- WO-A-99/28636
- WO-A-2004/083660
- DE-A1- 2 350 087
- DE-A1- 4 420 489
- US-A- 2 208 325
- US-A- 2 456 793
- US-A- 2 523 321
- US-A- 3 380 754
- US-A1- 2002 096 851
- US-B1- 6 446 947

## Beschreibung

Die Erfindung betrifft eine Gelenkeinheit nach dem Oberbegriff des Patentanspruches 1.

Radaufhängungen in Kraftfahrzeugen weisen je nach Anforderung und Funktion unterschiedliche Lager beziehungsweise Gelenke auf. So sind beispielsweise Kugelgelenke geeignet, eine Relativbewegung zweier Bauteile in mehreren Freiheitsgeraden zu ermöglichen. Es sind auch Gelenkeinheiten bekannt, die zur Dämpfung über das Rad eingeleiteter Schwingungen Elastomerschichten aufweisen. Folglich lassen sich mittels bekannter Gelenkeinheiten die Eigenschaften des Kraftfahrzeuges und hier insbesondere die der Radaufhängung nicht nur hinsichtlich der Radführung allgemein, sondern auch im Hinblick auf eine Komfortsteigerung beeinflussen.

Bei Gelenkeinheiten in Fahrwerkskomponenten handelt es sich um hoch beanspruchte Sicherheitsbauteile, die üblicherweise nach dem "Safe-Life-Prinzip", also mit mehrfacher Sicherheit betriebssicher für die gesamte Lebensdauer eines Kraftfahrzeugs ausgelegt sind. Trotzdem sind rein theoretisch Ereignisse oder sehr ungünstige Kausalzusammenhänge denkbar, bei denen es zum Totalausfall derartiger Gelenkeinheiten kommen kann. Möglich wäre dies beispielsweise in Folge sich einstellenden Verschleißes der Lagerschale oder durch Korrosionsbildung am Kugelzapfen, weil nach dem Versagen des Dichtsystems Verunreinigungen oder Wasser in das Gelenkinnere eindringen konnten. Die Folge könnte sein, dass eine derart geschädigte Gelenkeinheit komplett separiert wird, das heißt, sich der Verbund zwischen Gehäuse und Zapfen lösen würde.

Bekannte Gelenkeinheiten bestehen aus einem Gehäuse und einem Zapfen, wobei der mittels einer sphäroiden Lagerfläche in dem Gehäuse gelagerte Zapfen eine Gleitbewegung innerhalb des Gehäuses ausführen kann. Die sphäroide Lagerfläche, welche Bestandteil des Zapfens sein kann oder mit diesem im Sinne einer Montage verbindbar ist, stellt eine im Stand der Technik übliche Form der Lagergeometrie dar. So geht beispielsweise aus der DE-OS 23 50 087 oder der EP 1 036 280 A1 eine derartige Gelenkeinheit hervor. Da bei den bekannten Gelenkeinheiten Bauteile relativ zueinander bewegbar miteinander verbunden sind, stellt die Berücksichtigung des zwischen den relativ bewegbaren Bauteilen eintretenden Verschleißes ein wesentliches Qualitätsmerkmal dar. Folglich werden erhebliche Anstrengungen unternommen, den Verschleiß über die gesamte Lebensdauer der Gelenkeinheit möglichst gering zu halten oder ihn gänzlich zu eliminieren. Aus diesem Grund werden bekannte Gelenkeinheiten aufwendig abgedichtet, um das Eindringen von Wasser oder Verunreinigungen in die inneren Gelenkbauteile zu verhindern. Die vorhandenen Lösungen sind ausgereift und gewährleisten zumeist eine Funktionssicherheit der Gelenkeinheiten weit über die Lebensdauer des Kraftfahrzeuges hinaus, so dass ein Ausfall der Gelenkeinheit auszuschließen ist.

Dennoch kann es zum Beispiel während erforderlicher Reparatur- oder Wartungsarbeiten an der Radaufhängung eines Kraftfahrzeuges dazu kommen, dass aus Versehen und unbemerkt Teile der Gelenkeinheit beschädigt werden. Würde dieser Fall tatsächlich eintreten, so könnte das bereits erwähnte Endringen von Wasser und/oder Verunreinigungen in das Innere der Gelenkeinheit nicht mehr mit Sicherheit ausgeschlossen werden. Dies hätte jedoch einen vorzeitigen verstärkten Verschleiß der Bauteile der Gelenkeinheit zur Folge. Im Extremfall wäre sogar die vollständige Separation (Trennung) des Gehäuses vom Zapfen denkbar. Ein derartiger Fall muss aus Sicherheitsgründen jedoch ausgeschlossen sein. Aus dem Stand der Technik sind bislang keine Lösungen bekannt, die eine vollständige Separation zwischen Gehäuse und Zapfen verhindern, so dass ein derartig verschlissenes Fahrzeug beispielsweise noch mit einer Notlauffunktion in die nächstgelegene Werkstatt gebracht werden könnte.

Die US 2002/096851 A1 zeigt eine Lageranordnung für einen Lenker einer Radaufhängung eines Kraftfahrzeuges mit einem Gehäuse und einem Zapfen, dessen kugelige Lagerfläche in dem Gehäuse gleitend gelagert ist. Anderenends ist der Zapfen in einem Anschlussbauteil aufgenommen und befestigt. An dem Anschlussbauteil ist ferner ein Sicherungsbügel befestigt, der eine Ausnehmung aufweist, in welche ein mit dem Gehäuse verbundener Fangzapfen im Normalbetrieb berührungslos eingreift. Der Sicherungsbügel kann nach dieser Ausbildung erst montiert werden, wenn das Gelenk bzw. der Zapfen im Anschlussbauteil bereits montiert ist. Dies ist in der Montage aufwendig und führt zu Justageproblemen, da keine kompakte vormontierte Baueinheit vorhanden ist. Zudem ist der Sicherungsbügel lediglich dafür ausgebildet, dass der Zapfen aus dem Anschlussbauteil gegen Verlieren bzw. Separation gesichert ist und nicht die Gelenkkugel aus dem Gehäuse.

Die WO 2004/083660 A1 zeigt das Zentralgelenk eines Dreiecklenkers insbesondere für ein Nutzkraftfahrzeug. Ein mit einem Flansch versehener Zapfen ist dabei mittels einer auf den Gelenkzapfen aufgesetzten Gelenkkugel in einem Gelenkgehäuse gleitend gelagert. Eine Sicherungsvorrichtung gegen eine vollständige Separation des Gehäuses vom Zapfen ist nicht vorgesehen

Der Erfindung liegt die Aufgabe zugrunde, eine Gelenkeinheit derart weiterzuentwickeln, dass selbst bei einer sich einstellenden vollständigen Separation zwischen Gehäuse und Zapfen eine Notlauffunktion der Gelenkeinheit weiterhin gewährleistet ist.

Diese Aufgabenstellung wird mit den Merkmalen des Patentanspruches 1 gelöst. Weitere Ausgestaltungen der Erfindung sind in den sich anschließenden Unteransprüchen wiedergegeben.

Erfindungsgemäß wird zur Vermeidung der vollständigen Trennung (Separation) des Gehäuses vom Zapfen vorgeschlagen, dass die Gelenkeinheit mit einer Fangvorrichtung ausgestattet wird. Die Fangvorrichtung kann mindestens einen Sicherungsbügel mit einer Ausnehmung, in die im Normalbetrieb ein Fangzapfen des Gehäuses berührungslos hineinragt oder wenigstens zwei Sicherungsbügel aufweisen.
Es wird ein Fangband eingesetzt, das das Gehäuse zumindest abschnittsweise berührungslos überspannt und seine eigentliche Funktion erst bei dem Bestreben der Gelenkbauteile, sich von einander zu lösen, erfüllt. Mit einem derartigen Fangband ist die Fangvorrichtung sehr einfach gestaltbar und kann somit kostengünstig auch als Nachrüstbausatz für eine erfindungsgemäße Gelenkeinheit zur Verfügung gestellt werden.

Ferner ist erfindungsgemäß vorgesehen, das Gehäuse mit zumindest einem Fangzapfen auszustatten, der im Normalbetrieb berührungslos in eine dafür an dem zugeordneten Sicherungsbügel vorhandene Ausnehmung hineinragt. Die berührungslose Bauteilpaarung zwischen Fangzapfen und Sicherungsbügel ist deshalb erforderlich, da die Gelenkeinheit im Normalbetrieb ihre Funktion ohne Beeinträchtigung der Radaufhängung des Kraftfahrzeuges ausführen können muss.In an sich bekannter Weise ist der Zapfen einer erfindungsgemäßen Gelenkeinheit an dem Anschlussflansch befestigt oder mit diesem einteilig ausgebildet, wobei darüber hinaus die sphäroide Lagerfläche Bestandteil einer auf dem Zapfen montierten oder an diesem ausgebildeten Gelenkkugel ist.

Erfindungsgemäß ist die Fangvorrichtung unmittelbar an einem Anschlussflansch der Gelenkeinheit befestigt oder an diesem Anschlussflansch angeformt, das heißt mit diesem einteilig ausgebildet ist. Somit kann ohne erheblichen zusätzlichen Aufwand, eine an sich bekannte Gelenkeinheit nachträglich mit einer erfindungsgemäßen Fangvorrichtung ausgestattet werden. Dies ist insbesondere dann möglich, wenn die Fangvorrichtung an dem Anschlussflansch montiert wird. Anderenfalls wäre der Anschlussflansch insgesamt auszuwechseln.

Eine sehr einfache mechanische Ausführungsform einer Fangvorrichtung kann darin bestehen, dass die Fangvorrichtung mindestens zwei Sicherungsbügel aufweist. Diese Sicherungsbügel überspannen das Gehäuse der Gelenkeinheit zumindest abschnittsweise, so dass bei einer verschleißbedingten Separation des Gehäuses vom Zapfen die Fangvorrichtung in der Lage ist, die sich von einander lösenden Bauteile in einer Notlaufstellung zu fixieren.

Um sicher zu stellen, dass die Funktion einer in dem Kraftfahrzeug befindlichen Gelenkeinheit nach der hier beschriebenen Erfindung uneingeschränkt gewährleistet bleibt, sollte die Fangvorrichtung im Normalbetrieb zumindest einen Teil des Gehäuses berührungslos überspannen. Somit findet bevorzugt kein oder nur ein geringfügiger Kontakt zwischen der erfindungsgemäßen Fangvorrichtung und dem Gehäuse der Gelenkeinheit statt, so dass die relativ zueinander bewegbaren Bauteile der Radaufhängung in ihrer Bewegungsfreiheit nicht beeinträchtigt werden. Unter "Normalbetrieb" wird dabei die ausfallfreie Funktionsweise der Gelenkeinheit entsprechend ihres Einsatzzweckes verstanden.

Damit kann insgesamt ein redundantes Sicherheitssystem für eine Gelenkeinheit eines Lenkers einer Radaufhängung in einem Kraftfahrzeug zur Verfügung gestellt werden. Das System ist deshalb redundant, da unter normalen Umständen und Einsatzbedingungen eines Kraftfahrzeuges die Sicherheit einer Gelenkeinheit derart hoch ausgelegt ist, dass ein vollständiger Ausfall ausgeschlossen ist. Erfindungsgemäß wird ein sehr einfaches, vorzugsweise mechanisches Sicherheitssystem zur Verfügung gestellt, das weiterhin den Einsatz bekannter Gelenkeinheiten gestattet, da es diese hinsichtlich ihrer Funktion nicht beeinträchtigt. Somit wird auch eine Nachrüstung bekannter Gelenkeinheiten mit der Fangvorrichtung möglich, sodass damit eine zusätzliche Steigerung der Sicherheit von Kraftfahrzeugen möglich ist.

Eine Weiterbildung der Erfindung ist darin zu sehen, dass die Sicherungsbügel das Gehäuse krallenartig und im Normalbetrieb berührungslos überspannen. Diese Variante bringt beachtliche Gewichtsvorteile.

Ebenso besteht die Möglichkeit, für die erfindungsgemäße Lösung eine Gelenkkugel zum Einsatz zu bringen, die in einer in das Gehäuse eingesetzten Lagerschale aufgenommen ist. Dem gemäß ist ein besonderer Anwendungsfall der hier beschriebenen erfindungsgemäßen Gelenkeinheit darin zu sehen, dass diese das Zentralgelenk eines Dreiecklenkers einer Kraftfahrzeugradaufhängung, insbesondere eines Nutzkraftwagens bildet und das Gehäuse folglich mit Lenkerarmen des Dreiecklenkers verbunden ist.

Bevorzugte Ausführungsformen einer erfindungsgemäßen Gelenkeinheit werden nachfolgend anhand der Figuren näher beschrieben.

Es zeigen:
- Figur 1:: einen schematisch vereinfachten Teilschnitt durch eine erfindungsgemäße Gelenkeinheit in einer ersten Ausführungsvariante am Beispiel eines Dreiecklenkerzentralgelenkes eines Nutzkraftfahrzeuges,
- Figur 2:: eine perspektivische Darstellung des Dreiecklenkerzentralgelenkes nach Figur 1,
- Figur 3:: eine zweite Ausführung einer erfindungsgemäßen Gelenkeinheit am Beispiel eines Zentralgelenkes für einen Dreiecklenker eines Nutzkraftfahrzeuges,
- Figur 4:: eine dritte Ausgestaltung einer erfindungsgemäßen Gelenkeinheit, ebenfalls dargestellt anhand des Dreiecklenkerzentralgelenkes eines Nutzkraftfahrzeuges
und
- Figur 5:: eine vierte Ausführungsform einer erfindungsgemäßen Gelenkeinheit mit einer Fangvorrichtung, wiederum am Beispiel eines Dreiecklenkerzentralgelenkes für ein Nutzkraftfahrzeug.

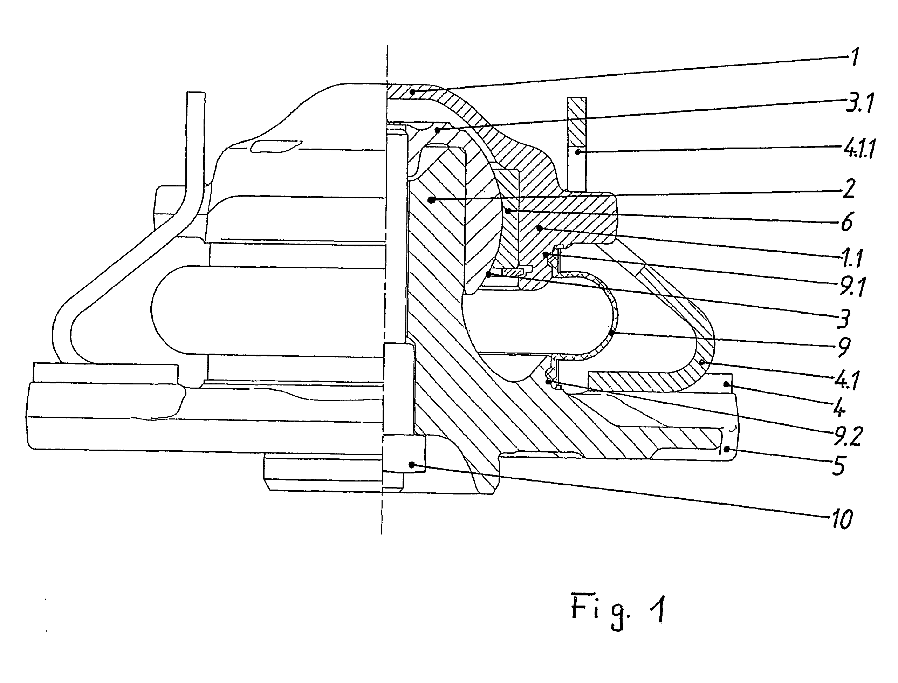

In dem in der Figur 1 gezeigten Ausführungsbeispiel einer erfindungsgemäßen Gelenkeinheit, die teilweise geschnitten und schematisch vereinfacht gezeigt ist, lassen sich die wesentlichen erfindungsgemäßen Merkmale erläutern, ohne dass diese oder eine weitere Figurendarstellung eine Einschränkung auf den konkret gezeigten Gegenstand bedeutet. In den einzelnen Figuren werden nachfolgend einheitliche Bezugsziffern verwendet, sofern sie für gleiche Bauteile oder Baugruppen zum Einsatz kommen.

Die Gelenkeinheit in Figur 1 weist ein Gehäuse 1 auf. Das Gehäuse 1 ist mit einem zapfenförmigen Anschlussbereich ausgestattet, an dem nur ein Lenkerarm 8 eines Lenkerpaares 7, 8 eines Dreiecklenkers für ein Nutzkraftfahrzeug sichtbar ist. Das Gehäuse 1 ist hier als einseitig offene Ausführung ausgestaltet. Es weist einen inneren Hohlraum auf, in den eine Lagerschale 6 eingesetzt ist. Die Lagerschale aus ermöglicht innerhalb der Gelenkeinheit eine Schwingungen dämpfende und zugleich Gleiteigenschaften aufweisende Lagerungsfunktion. Die Lagerschale 6 nimmt ihrerseits gelenkeinwärts betrachtet, die sphäroide Lagerfläche 3 einer Gelenkkugel 3.1 auf. Die Gelenkkugel 3.1 ist mittels einer Verschraubung 10 auf einem Zapfen 2 durch Montage befestigt. Zur Sicherung der Lagerschale 6 gegen ein axiales Auswandern aus der Öffnung des Gehäuses 1 dient ein Sicherungsring 11.

Außenseitig verfügt das Gehäuse 1 über einen Fangzapfen 1.1., der von der Gehäuseoberfläche abstehend ausgeführt ist. Der abstehende Teil des Fangzapfens 1.1. durchragt berührungslos eine Ausnehmung 4.1.1. eines Sicherungsbügels 4.1, wobei der Sicherungsbügel 4.1 bei dem hier gezeigten Ausführungsbeispiel einer erfindungsgemäßen Gelenkeinheit die Fangvorrichtung 4 darstellt. Der Sicherungsbügel 4.1 wird während der Montage der Gelenkeinheit auf der Achse eines Nutzkraftwagens zusammen mit dem Anschlussflansch 5 mittels einer Verschraubung befestigt.

Zur Abdichtung der inneren Gelenkbauteile der in Figur 1 gezeigten Gelenkeinheit gegen Verunreinigungen dient ein Dichtungsbalg 9. Dieser weist zwei Befestigungsbereiche 9.1 und 9.2 auf, mittels derer er dichtend am Gehäuse 1 und am Zapfen 2 befestigt ist.

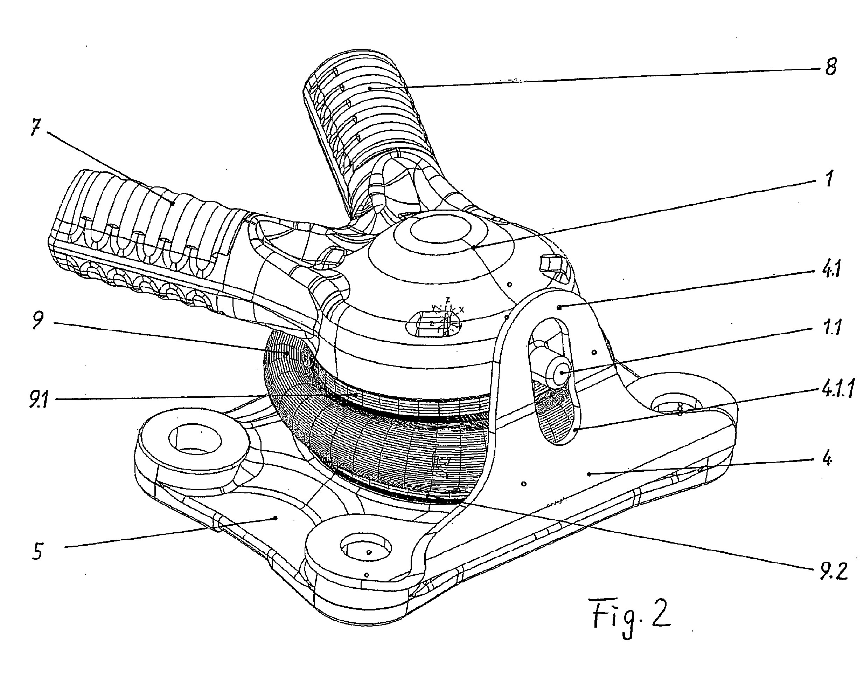

Im Normalbetrieb der dargestellten Gelenkeinheit findet zwischen dem Fangzapfen 1.1 und dem Sicherungsbügel 4.1 kein Berührungskontakt statt. Hierzu weist die langlochähnliche Ausnehmung 4.1.1 (besser erkennbar in der Figur 2) in dem Sicherungsbügel 4.1 hinreichende Abmessungen auf. Für den Fall einer sich einstellenden Separation des Gehäuses 1 vom Zapfen 2 würde dies zu einer axialen Bewegung des Gehäuses 1 in Richtung der Lagermittenachse führen, so dass der Fangzapfen 1.1 in Richtung des oberen bügelförmigen Bereiches des Sicherungsbügels 4.1 auswandern würde. Diese Bewegbarkeit des Gehäuses in axialer Richtung relativ zum Zapfen 2 wäre demnach möglich, bis der Fangzapfen 1.1 seine Funktion erfüllt und am Sicherungsbügel 4.1 zur Anlage kommt. Der Fahrzeugführer würde eine derartige Störung der Radaufhängung unweigerlich bemerken, so dass das Fahrzeug mit der hierdurch gewährleisteten Notlauffunktion in eine Werkstatt verbracht werden kann, um die erforderlichen Bauteile austauschen zu können.

In der Figur 2 wird die in Figur 1 gezeigte Gelenkeinheit in perspektivischer Ansicht dargestellt. Die ausschnittsweise angedeuteten Lenkerarme 7 und 8 sind Bestandteile eines Dreiecklenkers für Nutzkraftfahrzeuge. Darüber hinaus ist der am Gehäuse 1 angeformte Fangzapfen 1.1 auf der den Lenkerarmen 7 und 8 gegenüber liegenden Seite erkennbar. Dieser Fangzapfen 1.1. durchragt die Ausnehmung 4.1.1 der Fangvorrichtung 4, die vorliegend als Sicherungsbügel 4.1 ausgeführt ist. Der Sicherungsbügel 4.1 wird in der bereits erwähnten Art und Weise zusammen mit dem Anschlussflansch 5 auf dem Achskörper der Hinterachse eines Nutzkraftfahrzeuges befestigt.

In der Figur 2 ist ferner die Außenseite des zwischen Gehäuse 1 und Zapfen 2 angeordneten, die inneren Gelenkbauteile vor eindringenden Verunreinigungen schützenden Dichtungsbalges 9 erkennbar. Der Dichtungsbalg 9 ist mittels seiner Befestigungsbereiche 9.1 und 9.2 an den zuvor genannten Teilen der Gelenkeinheit 1 dichtend gehalten.

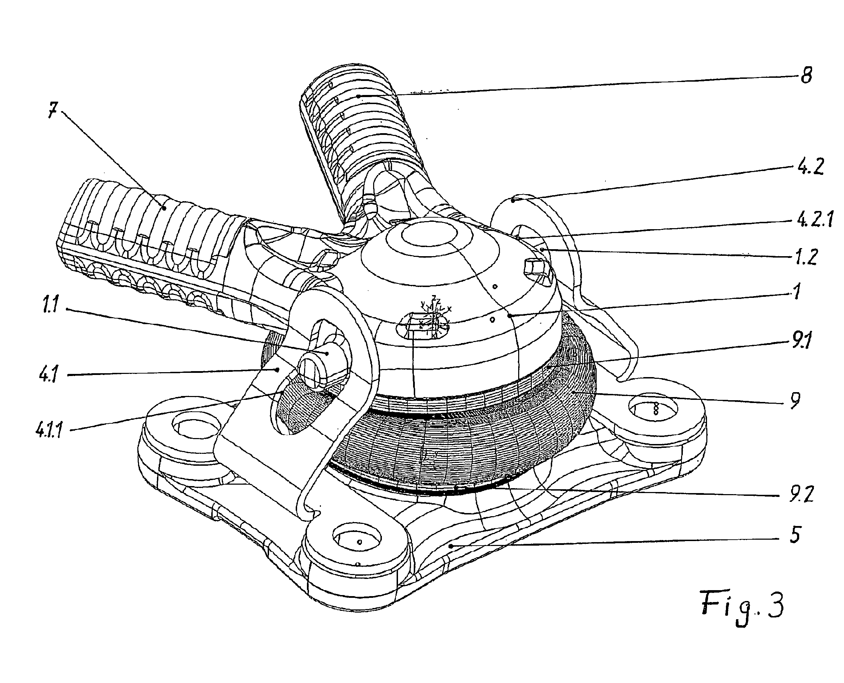

Die Figur 3 zeigt im Unterschied zu den zuvor beschriebenen Ausführungsformen eine Variante einer Gelenkeinheit 1 mit zwei einander gegenüberliegend an dem Anschlussflansch 5 befestigten Fangvorrichtungen, die vorliegend aus je einem Sicherungsbügel 4.1 beziehungsweise 4.2 bestehen. Der Sicherungsbügel 4.1 verfügt über eine langlochähnliche Ausnehmung 4.1.1, während in dem Sicherungsbügel 4.2 eine derartige Ausnehmung 4.2.1 vorhanden ist. Diese Ausnehmungen 4.1.1. und 4.2.1 werden jeweils von einem Fangzapfen 1.1 und 1.2 durchragt. Dabei ist der am Gehäuse 1 befestigte Fangzapfen 1.1. beziehungsweise 1.2 innerhalb der genannten Ausnehmungen frei bewegbar, ohne dass ein Berührungskontakt zwischen Fangzapfen und Sicherungsbügel 4.1 beziehungsweise 4.2 stattfindet, solange ein Normalbetrieb, das heißt die sichere Funktionsweise der dargestellten Gelenkeinheit gewährleistet ist. Wie auch bei der zuvor beschriebenen Ausführungsvariante verfügt das in Figur 3 gezeigte Zentralgelenk über einen Dichtungsbalg 9 mit seinem Befestigungsbereich 9.1 und 9.2. Die Sicherungsbügel 4.1 beziehungsweise 4.2 werden auch bei dieser Variante zusammen mit dem Anschlussflansch 5 befestigt.

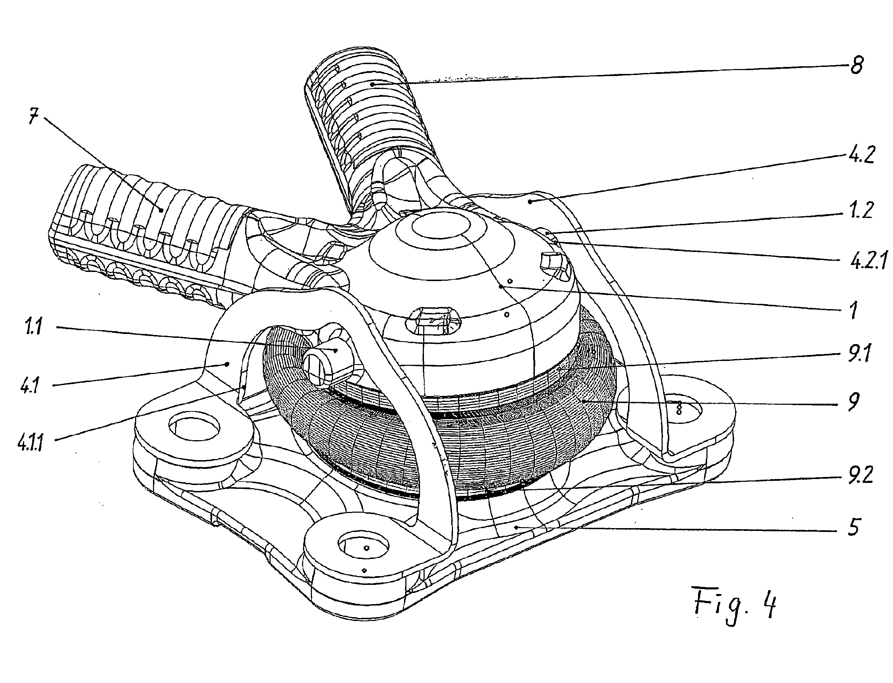

Eine weitere Ausführungsform einer erfindungsgemäßen Gelenkeinheit 1 ist in der Figur 4 gezeigt. Im Unterschied zu den zuvor beschriebenen Varianten einer Gelenkeinheit, sind hier die Sicherungsbügel 4.1 und 4.2 bogenförmig gestaltet und überspannen den zugehörigen Fangzapfen 1.1 beziehungsweise 1.2 als Teil des Gehäuses 1 in einer weitläufigen Ebene. Etwa mittig verfügen die Sicherungsbügel 4.1 und 4.2 über eine Geometrie, die es dem Fangzapfen 1.1 beziehungsweise 1.2 bei Separation des Gehäuses 1 vom Zapfen 2 ermöglicht, an einer definierten Position mit dem Sicherungsbügel 4. 1 beziehungsweise 4.,2 in Kontakt zu treten, um somit die Notlauffunktion der erfindungsgemäßen Gelenkeinheit zu gewährleisten. Die Befestigung der Sicherungsbügel 4.1 und 4.2 erfolgt - wie bereits zuvor ausgeführt - über die Festlegung des Anschlussflansches 5 auf der Fahrzeugachse des Nutzkraftzeuges.

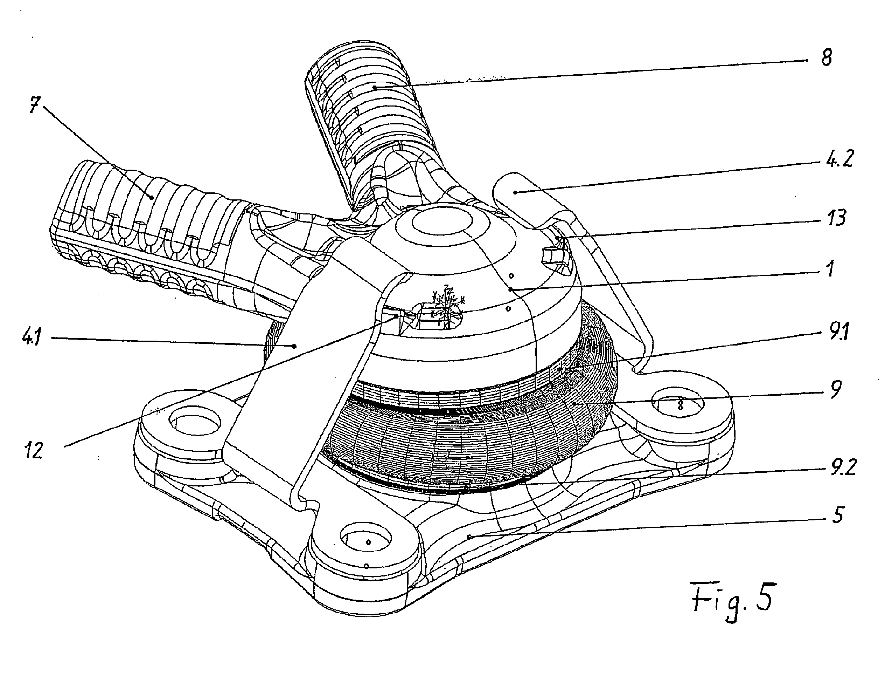

Auch die der Figur 5 entnehmbare perspektivische Ansicht einer Gelenkeinheit gewährleistet in einfacher Weise eine Notlauffunktion für den Fall, dass sich das Gehäuse 1 vom Zapfen 2 löst. Hierbei wurde an dem Gehäuse kein Fangzapfen vorgesehen. Vielmehr besteht die Fangvorrichtung 4 aus zwei jeweils einander gegenüber liegenden Sicherungsbügeln 4.1 und 4.2, die einen Teil der Oberfläche des Gehäuses 1 berührungslos überspannen, solange die Gelenkeinheit ihre Funktion erfüllt. Die Endabschnitte der Sicherungsbügel 4.1 und 4.2 weisen in axialer Richtung der Lagermittenachse betrachtet einen Abstand zur Oberfläche des Gehäuses 1 auf. Bei einer sich einstellenden Separation des Gehäuses 1 von Zapfen 2 stellt sich ein Berührungskontakt zwischen der Oberfläche des Gehäuses 1 und den krallenförmig ausgestalteten Endbereichen der Sicherungsbügel 4.1 und 4.2 ein. Zur Vermeidung des Abrutschens dieser krallenförmig gestalteten Endbereiche ist bei der gezeigten Ausführung jeweils eine zugeordnete, wulstförmige Erhebung 12, 13 auf die Oberfläche des Gehäuses 1 aufgebracht. Diese wulstförmige Erhebung 12 beziehungsweise 13 ist nicht zwingend erforderlich, wurde jedoch bei der dargestellten Ausführung als sinnvoll erachtet.

### Bezugszeichenliste

- 1.: Gehäuse
- 1.1: Fangzapfen
- 1.2: Fangzapfen
- 2: Zapfen
- 3: Lagerfläche
- 3.1: Gelenkkugel
- 4: Fangvorrichtung
- 4.1: Sicherungsbügel
- 4.1.1: Ausnehmung
- 4.2: Sicherungsbügel
- 4.2.1: Ausnehmung
- 5: Anschlussflansch
- 6: Lagerschale
- 7: Lenkerarm
- 8: Lenkerarm
- 9: Dichtungsbalg
- 9.1: Befestigungsbereich
- 9.2: Befestigungsbereich
- 10: Verschraubung
- 11: Sicherungsring
- 12: Erhebung
- 13: Erhebung

## Patentansprüche

1. Gelenkeinheit eines Lenkers einer Radaufhängung in einem Kraftfahrzeug, mit einem Gehäuse (1) und einem Zapfen (2), der mittels einer sphäroiden Lagerfläche (3) in dem Gehäuse gleitend gelagert ist, wobei der Zapfen (2) an dem Anschlussflansch (5) befestigt oder an diesem ausgebildet und die sphäroide Lagerfläche (3) Bestandteil einer auf dem Zapfen (2) montierten oder an diesem ausgebildeten Gelenkkugel (3.1) ist und wobei die Gelenkeinheit eine Fangvorrichtung (4) zur Vermeidung der vollständigen Separation des Gehäuses (1) vom Zapfen (2) aufweist, die im Normalbetrieb einen Teil des Gehäuses (1) berührungslos überspannt und mindestens einen Sicherungsbügel (4.1, 4.2) mit einer Ausnehmung (4.1.1, 4.2.1), in die im Normalbetrieb ein Fangzapfen (1.1, 1.2) des Gehäuses berührungslos hineinragt,
**dadurch gekennzeichnet, dass**
die Fangvorrichtung (4) an einem Anschlussflansch (5) der Gelenkeinheit befestigt oder an dem Anschlussflansch (5) angeformt ist oder wenigstens zwei Sicherungsbügel (4.1 und 4.2) aufweist.

2. Gelenkeinheit nach Anspruch 1,
**dadurch gekennzeichnet, dass**
die Sicherungsbügel (4.1 und 4.2) das Gehäuse (1) krallenartig und im Normalbetrieb berührungslos überspannen.

3. Gelenkeinheit nach Anspruch 5,
**dadurch gekennzeichnet, dass**
die Gelenkkugel (3.1) in einer in das Gehäuse (1) eingesetzten Lagerschale (6) aufgenommen ist.

4. Gelenkeinheit nach einem der vorstehenden Ansprüche,
**dadurch gekennzeichnet, dass**
die Gelenkeinheit das Zentralgelenk eines Dreiecklenkers einer Kraftfahrzeugradaufhängung, insbesondere eines Nutzkraftwagens bildet und das Gehäuse (1) mit Lenkerarmen (7, 8) verbunden ist.

## Claims

1. Joint unit of a control arm of a wheel suspension in a motor vehicle, comprising a housing (1) and a pin (2), which is slidingly mounted by means of a spheroidal bearing surface (3) in the housing, wherein the pin (2) is fastened to or formed on the connection flange (5) and the spheroidal bearing surface (3) is a component part of a joint ball (3.1) mounted or formed on the pin (2), and wherein the joint unit comprises a catch apparatus (4), which during normal operation extends without contact over a part of the housing (1), for preventing complete separation of the housing (1) from the pin (2) and at least one circlip (4.1, 4.2) having a recess (4.1.1, 4.2.1), into which during normal operation a catch pin (1.1, 1.2) of the housing projects without contact,
**characterized in that**
the catch apparatus (4) is fastened to a connection flange (5) of the joint unit or is formed on the connection flange (5) or comprises at least two circlips (4.1 and 4.2).

2. Joint unit according to claim 1,
**characterized in that**
the circlips (4.1 and 4.2) extend in a claw-like manner and during normal operation without contact over the housing (1).

3. Joint unit according to claim 5,
**characterized in that**
the joint ball (3.1) is accommodated in a bearing shell (6), which is inserted into the housing (1).

4. Joint unit according to one of the preceding claims,
**characterized in that**
the joint unit forms the central joint of a wishbone of a motor vehicle wheel suspension, in particular of a commercial vehicle and the housing (1) is connected to control arms (7, 8).

## Revendications

1. Unité d'articulation d'une bielle d'une suspension dans un véhicule automobile, comprenant un boîtier (1) et un axe (2), qui est supporté à coulissement dans le boîtier au moyen d'une surface d'appui sphéroïde (3), dans laquelle l'axe (2) est fixé à la bride de raccordement (5) ou formé sur celle-ci et la surface d'appui sphéroïde (3) fait partie d'une rotule d'articulation (3.1) montée sur l'axe (2) ou formée sur celui-ci, et dans laquelle l'unité d'articulation présente un dispositif d'arrêt (4) destiné à éviter la séparation complète entre le boîtier (1) et l'axe (2) qui, en fonctionnement normal, recouvre sans contact une partie du boîtier (1) et au moins un étrier de sécurité (4.1, 4.2) avec un évidement (4.1.1, 4.2.1), dans lequel un axe d'arrêt (1.1, 1.2) du boîtier fait saillie sans contact en fonctionnement normal,
**caractérisée en ce que**
le dispositif d'arrêt (4) est fixé à une bride de raccordement (5) de l'unité d'articulation ou est formé sur la bride de raccordement (5) ou présente au moins deux étriers de sécurité (4.1 et 4.2).

2. Unité d'articulation selon la revendication 1,
**caractérisée en ce que**
les étriers de sécurité (4.1 et 4.2) recouvrent le boîtier (1) a la manière de griffes et sans contact en fonctionnement normal.

3. Unité d'articulation selon la revendication 5,
**caractérisée en ce que**
la rotule d'articulation (3.1) est reçue dans une coquille de coussinet (6) inséré dans le boîtier (1).

4. Unité d'articulation selon l'une quelconque des revendications précédentes,
**caractérisée en ce que**
l'unité d'articulation forme l'articulation centrale d'un levier triangulaire d'une suspension de véhicule automobile, en particulier d'un véhicule utilitaire, et le boîtier (1) est raccordé à des bras de suspension (7, 8).
